# EUROPÄISCHE PATENTANMELDUNG

(11) **EP 2 138 728 A2**
(43) Veröffentlichungstag der Anmeldung: **30.12.2009**
(21) Anmeldenummer: 09163099.6
(22) Anmeldetag: 18.06.2009
(51) Int. Cl.: F16B 13/14, F16B 25/00

(54) **Ankerstange zur Verankerung in einem Bohrloch**

(30) Priorität: 25.06.2008 DE 102008030051
(71) Anmelder: Adolf Würth GmbH & Co. KG, 74653 Künzelsau (DE)
(72) Erfinder: Kerl, Gregor, 74676, Niedernhall (DE)

(57) **Zusammenfassung**

Eine Ankerstange (1) zur Verankerung in einem Bohrloch (2) in einem Verankerungsgrund (4), insbesondere Beton, untere Einsatz einer aushärtbaren Masse (6), die in das Bohrloch (2) einbringbar und dort aushärtbar ist, mit einem Schaft (10), der aufweist: ein Einführende (12), mindestens einen Verbunspreizabschnitt (14, 16), dessen Umfang sich zumindest abschnittsweise in Richtung zu dem Einführende (12) hin erweitert, und mindestens einen Schraubenabschnitt (18, 20), dessen Umfang mit einem Gewinde (18', 20') versehen ist, das dazu vorgesehen ist, in die Wandung (2') des Bohrlochs (2) einzugreifen.

## Beschreibung

### Technisches Gebiet

Die Erfindung eine Ankerstange zur Verankerung in einem Bohrloch in einem Verankerungsgrund, beispielsweise Beton, unter Einsatz einer aushärtbaren Masse, die in das Bohrloch einbringbar und dort aushärtbar ist.

### Stand der Technik

Verankerungen von unterschiedlichsten Gegenständen an Bauwerken mittels eingemörtelter Ankerstangen sind im Bauwesen sehr verbreitet. So offenbart beispielsweise die EP 0 856 669 B1 eine Ankerstange für einen Verbundspreizanker, die einen Schaft mit einer Mehrzahl von Spreizabschnitten aufweist. Der Schaft wird mittels eines Verbundmörtels in einem Bohrloch verankert. Im ausgehärteten Zustand des Verbundmörtels findet die Kraftübertragung einerseits durch die stoffschlüssige Wirkung des Verbundmörtels, andererseits aber auch über eine Spreizwirkung der Spreizabschnitte statt. Aus diesem Grund eignen sich derartige Verbundspreizanker für anspruchsvolle Verankerungen, insbesondere auch für sogenannten gerissenen Beton.

Ein Nachteil der bekannten Verbundspreizanker besteht jedoch darin, dass die Ankerstangen erst nach Aushärten des jeweiligen Verbundmörtels belastet werden können, sodass eine Montage der zu befestigenden Gegenstände erst in einem deutlichen zeitlichen Abstand nach dem Setzen der Verbundspreizanker erfolgen kann. Dies führt nicht nur zu einem zeitaufwändigen, sondern auch zu einem ablauftechnisch komplexen Montagevorgang der Verankerungen. So sind beispielsweise bei der Befestigung von Leitplanken auf Autobahnbrücken mehrere Arbeitsgänge entlang der Autobahnbrücke erforderlich.

Ferner erfordern Verbundspreizanker eine aufwändige Bohrlochreinigung, damit der Verbundmörtel seine volle Wirkung entfalten kann. Nicht zuletzt besitzen Verbundspreizanker auch den Nachteil, dass sie aufgrund der hohen Spreizkräfte nur bedingt für randnahe Befestigungen geeignet sind.

Darüber hinaus sind sogenannte Betonschrauben bekannt, die ein selbstschneidendes Gewinde aufweisen und mit oder ohne Verbundmörtel in ein Bohrloch eingeschraubt werden (vgl. beispielsweise DE 198 41 135 A1 oder EP 0 955 476 B1). Allerdings hat sich gezeigt, dass derartige Betonschrauben eine aufwändige Konstruktion und somit Herstellung mit sich bringen und insbesondere in Kombination mit einem Verbundmörtel schwer einzudrehen sind, was häufig zu Schraubenbrüchen führen kann.

### Darstellung der Erfindung

Es ist daher Aufgabe der vorliegenden Erfindung, eine Ankerstange zur Verankerung in einem Bohrloch in einem Verankerungsgrund bereitzustellen, die eine frühe Belastbarkeit der Ankerstange ermöglicht, ohne zu einer übermäßig aufwändigen Konstruktion oder Montage zu führen.

Diese Aufgabe wird erfindungsgemäß durch eine Ankerstange nach Anspruch 1 gelöst. Besonders bevorzugte Ausführungsformen der Erfindung sind in den abhängigen Ansprüchen angegeben.

Der Erfindung liegt der Gedanke zugrunde, erstmals mehrere Verankerungskonzepte in einer einzelnen Ankerstange zu vereinen und somit gewissermaßen eine "Hybridankerstange" zu schaffen. Zu diesem Zweck ist erfindungsgemäß vorgesehen, dass der Schaft der Ankerstange mindestens einen Verbundspreizabschnitt, dessen Umfang sich zumindest abschnittsweise in Richtung zu einem Einführende des Schafts hin erweitert, und mindestens einen Schraubenabschnitt, dessen Umfang mit einem Gewinde versehen ist, das dazu vorgesehen ist, in die Wandung eines Bohrlochs einzugreifen, aufweist.

Auf diese Weise wird eine Ankerstange geschaffen, bei der sofort nach dem Einrehen der Ankerstange in ein Bohrloch ein Montagedrehmoment aufgebracht werden kann, da dieses von dem mindestens einen Schraubenabschnitt aufgenommen wird. Ferner ermöglicht der mindestens eine Schraubenabschnitt einen konstanteren Ringspalt im Bereich des mindestens einen Verbundspreizabschnitts, sodass sich ein optimaler Verbundbereich ergibt. Dabei bewirkt der Verbundbereich nicht nur ein gutes Trag- und Nachspreizverhalten, sondern schützt die Ankerstange bzw. eine gesamte Befestigungsanordnung auch vor dem Eindringen von Feuchtigkeit, was die Dauerhaftigkeit deutlich verbessert. Darüber hinaus besitzt die erfindungsgemäße Ankerstange eine einfache Konstruktion, da für viele Anwendungsfälle ein kurzer Schraubenabschnitt genügt, sodass nicht die gesamte Ankerstange mit einem aufwändigen Gewinde versehen werden muss.

Generell ist zu beachten, dass im Rahmen der vorliegenden Erfindung unterschiedlichste Kombinationen einzelner oder mehrerer Schraubenabschnitte und Verbundspreizabschnitte möglich sind.

Gemäß einer Weiterbildung der Erfindung ist dabei vorgesehen, dass mindestens ein Schraubenabschnitt zwischen dem Einführende und einem Verbundspreizabschnitt gelegen ist. Hierdurch werden sowohl statische als auch montagetechnische Vorteile erreicht. So ermöglicht die Anordnung des mindestens einen Schraubenabschnitts zwischen dem Einführende und dem Verbundspreizabschnitt eine besonders wirksame Vorreinigung des Bohrlochs bzw. Vermischung verbleibenden Bohrmehls mit dem Mörtel sowie die Erzeugung eines schraubenartigen Hinterschnitts in der Bohrlochwandung, in den der Mörtel eindringen und sich formschlüssig verankern kann. Weiterhin wird auf diese Weise der Verbundbereich näher zur Bohrlochmündung, d.h. im Bereich größerer Rissbreiten, angeordnet, sodass sich ein besonders vorteilhafter Effekt des Nachspreizens im Verbundbereich ergibt. Dies schließt jedoch nicht aus, dass auf der dem Einführende zugewandten Seite des Gewindeabschnitts ggf. ein weiterer Verbundspreizabschnitt vorgesehen sein kann.

Alternativ oder zusätzlich ist gemäß einer Weiterbildung der Erfindung vorgesehen, dass mindestens ein Schraubenabschnitt auf der dem Einführende gegenüberliegenden Seite des Verbundspreizabschnitts gelegen ist. Hierdurch ergibt sich eine besonders präzise Ausrichtung der Ankerstange mit gleichmäßigem Ringspalt, gleichmäßiger Verteilung der Verankerungskräfte sowie gegebenenfalls einer Verdichtung der aushärtbaren Masse.

Gemäß einer Weiterbildung der Erfindung ist ferner vorgesehen, dass mindestens ein Verbundspreizabschnitt eine Mehrzahl konischer Spreizabschnitte aufweist, deren Umfang sich jeweils zumindest abschnittsweise in Richtung zu dem Einführende hin erweitert. Auf diese Weise ergeben sich eine gleichmäßige Verteilung der Verankerungskräfte sowie ein guten Nachspreizen. Die Anzahl der konischen Spreizabschnitte ist im Rahmen der Erfindung nicht besonders beschränkt, allerdings hat sich der Einsatz von mindestens drei konischen Spreizabschnitten als besonders wirksam erwiesen. Ebenso ist die Länge der konischen Spreizabschnitte im Rahmen der Erfindung vielfältig variierbar, obgleich sich eine Länge als vorteilhaft erwiesen hat, die etwa dem Nenndurchmesser des Schraubenabschnitts entspricht.

Um bei einer Belastung der Ankerstange und einer etwaigen Rissbildung im Beton eine gute Aktivierung der Spreizfunktion im Verbundspreizabschnitt zu erreichen, ist gemäß einer Weiterbildung der Erfindung vorgesehen, dass mindestens ein Verbundspreizabschnitt zumindest abschnittsweise eine Beschichtung oder Umhüllung aufweist. Dabei kommen als Beschichtung unterschiedlichste Materialien in Frage, wie beispielsweise Kunststoffbeschichtungen, metallische Beschichtungen oder Trennmittel wie beispielsweise Teflon oder Wachs. Bei der Umhüllung kann es sich beispielsweise um einen Schrumpfschlauch handeln, obgleich auch hier vielfältige andere Ausgestaltungen möglich sind.

Der Schraubenabschnitt kann im Rahmen der vorliegenden Erfindung auf unterschiedlichste Art und Weise ausgestaltet sein und gegebenenfalls auch dazu ausgelegt sein, in ein im Beton bereits vorhandenes Gewinde eingedreht zu werden. Um jedoch eine einfache und schnelle Montage sowie eine sichere Verankerung der Ankerstange zu erzielen, ist gemäß einer Weiterbildung der Erfindung vorgesehen, dass mindestens ein Schraubenabschnitt ein selbstschneidendes Gewinde aufweist.

Die Abmessungen des mindestens einen Schraubenabschnitts sind im Rahmen der vorliegenden Erfindung vielfältig variierbar. Gemäß einer Weiterbildung der Erfindung ist jedoch vorgesehen, dass zumindest ein Schraubenabschnitt in einer Erstreckungsrichtung der Ankerstange eine Länge besitzt, die zumindest dem 1,0-fachen und bevorzugt höchstens dem 5,0-fachen des Nenndurchmessers des Schraubenabschnitts entspricht. Auf diese Weise ergibt sich ein leichtes Eindrehen der Ankerstange, während gleichzeitig ein ausreichendes Vorspanndrehmoment aufgebracht werden kann. Dabei hat sich ein Bereich von 1,5 bis 3,0 für die Länge der Ankerstange in Bezug auf den Nenndurchmesser des Schraubenabschnitts als besonders wirksam erwiesen.

Im Hinblick auf ein leichtes Eindrehen der Ankerstange in ein mit einer aushärtbaren Masse gefülltes Bohrloch sowie eine gute Verteilung der aushärtbaren Masse in einem Ringspalt um die Ankerstange herum ist gemäß einer Weiterbildung der Erfindung vorgesehen, dass zumindest ein Schraubenabschnitt, insbesondere ein zwischen dem Einführende und einem Verbundspreizabschnitt gelegener Schraubenabschnitt, Leitmittel zum Leiten einer aushärtbaren Masse in einer Längsrichtung der Ankerstange weg vom Einführende aufweist.

Die Leitmittel können im.Rahmen der Erfindung auf unterschiedlichste Art und Weise ausgestaltet sein und beispielsweise auch eine Oberflächenbeschichtung umfassen, wie sie obenstehend bereits beschrieben wurde. Gemäß einer Weiterbildung der Erfindung ist jedoch vorgesehen, dass die Leitmittel wendelartige Vertiefungen in der Oberfläche des Schraubenabschnitts und/oder mindestens eine Durchgangsöffnung im Schaft der Ankerstange, die bevorzugt ausgehend vom Einführende in einen Verbundspreizabschnitt mündet, aufweisen. Hierdurch ergibt sich bei einfacher Konstruktion eine wirksame Weiterleitung der aushärtbaren Masse vom Einführende der Ankerstange hin zum Verbundspreizabschnitt mit entsprechend geringem Eindrehmoment und guter Verfüllung des Ringspalts.

Ferner stellt die vorliegende Erfindung eine Befestigungsanordnung nach Anspruch 10 bereit, durch welche sich die oben genannten Vorteile besonders ausgeprägt verwirklichen lassen. Dabei kann die aushärtbare Masse den Ringspalt um die Ankerstange herum vollständig füllen oder auch nur in Teilbereichen des Ringspalts angeordnet sein. Gemäß einer Weiterbildung der Erfindung ist in diesem Zusammenhang vorgesehen, dass die aushärtbare Masse zumindest im Bereich des Verbundspreizabschnitts vorgesehen ist. Auf diese Weise lassen sich bei minimalem Materialverbrauch und minimalem Eindrehmoment praktisch alle erfindungsgemäßen Vorteile erzielen.

### Kurze Beschreibung der Zeichnungen

- Fig. 1: zeigt schematisch eine teilweise geschnittene Ansicht einer Befestigungsanordnung gemäß einer ersten Ausführungsform der vorliegenden Erfindung;
- Fig. 2: zeigt schematisch eine teilweise geschnittene Ansicht einer Befestigungsanordnung gemäß einer zweiten Ausführungsform der vorliegenden Erfindung;
- Fig. 3: zeigt schematisch eine teilweise geschnittene Ansicht einer Befestigungsanordnung gemäß einer dritten Ausführungsform der vorliegenden Erfindung;
- Fig. 4: zeigt schematisch eine teilweise geschnittene Ansicht einer Befestigungsanordnung gemäß einer vierten Ausführungsform der vorliegenden Erfindung;
- Fig. 5: zeigt schematisch eine teilweise geschnittene Ansicht einer Befestigungsanordnung gemäß einer fünften Ausführungsform der vorliegenden Erfindung.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

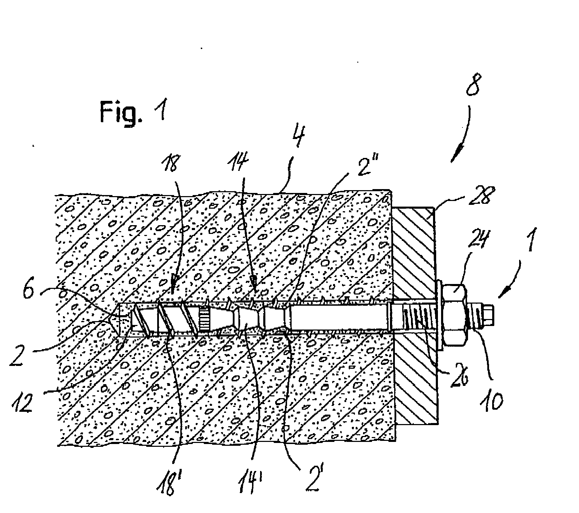

Eine Befestigungsanordnung 8 als erste bevorzugte Ausführungsform der vorliegenden Erfindung ist in Fig. 1 schematisch in einer teilweise geschnittenen Seitenansicht gezeigt. Die Befestigungsanordnung 8 umfasst eine Ankerstange 1, die über eine aushärtbare Masse 6 in einem Bohrloch 2 in einem Verankerungsgrund 4 verankert ist. Bei dem Verankerungsgrund 4 kann es sich beispielsweise um Beton, aber auch um andere Baumaterialien wie beispielsweise Ziegel und gegebenenfalls auch Holz, Kunststoff, etc. handeln.

In einem zwischen der Ankerstange 1 und der Bohrlochwandung 2' vorgesehenen Ringspalt 2" ist die aushärtbare Masse 6 angeordnet, bei der es sich beispielsweise um einen Mörtel handeln kann. Dabei können unterschiedlichste Mörtelarten zum Einsatz kommen, wie beispielsweise zementgebundener Mörtel oder polymergebundener Mörtel (z.B. Eypoxidharz oder Vinylester mit feinkörnigen Zuschlagstoffen).

Die Ankerstange 1 besitzt einen Schaft 10 mit einem Einführende 12, das im eingebauten zustand am Bohrlochgrund des Bohrlochs 2 angeordnet ist. Ferner besitzt der Schaft 10 in der vorliegenden Ausführungsform einen Verbundspreizabschnitt 14 und einen Schraubenabschnitt 18, der zwischen dem Einführende 12 und dem Verbundspreizabschnitt 14 gelegen ist.

Der Verbundspreizabschnitt 14 weist in der vorliegenden Ausführungsform drei konische Spreizabschnitte 14' auf, deren Umfang sich jeweils in Richtung zu dem Einführende 12 hin erweitert. Es ist jedoch zu beachten, dass die Anzahl und genaue Ausgestaltung der konischen Spreizabschnitte 14' im Rahmen der vorliegenden Erfindung nicht beschränkt ist. Dabei kann der Verbundspreizabschnitt 14 auch eine Beschichtung oder Umhüllung aufweisen, obgleich diese in den Figuren nicht gezeigt ist.

Der Schraubenabschnitt 18' ist in der vorliegenden Ausführungsform als selbstschneidendes Gewinde ausgeführt, das dazu ausgelegt ist, beim Eindrehen der Ankerstange 1 in das Bohrloch 2 in die Bohrlochwandung 2' einzugreifen und dort Gewindegänge zu hinterlassen, die in Fig. 1 schematisch angedeutet sind. Dies führt dazu, dass das Gewinde 18' des Schraubenabschnitts 18 im montierten Zustand der Ankerstange 1 teilweise in den umgebenden Verankerungsgrund 4 formschlüssig eingreift.

Die Längen des Schraubenabschnitts 18 und des Verbundspreizabschnitts 14, gemessen in der Erstreckungsrichtung des Schafts 10, können im Rahmen der vorliegenden Erfindung vielseitig variiert werden. Um jedoch ein leichtes Eindrehen der Ankerstange 1 in den Verankerungsgrund 4 und gleichzeitig eine ausreichende Verankerungswirkung des Schraubenabschnitts 18 zu erreichen, besitzt der Schraubenabschnitt 18 in der vorliegenden Ausführungsform eine Länge in Erstreckungsrichtung der Ankerstange 10, die etwa dem 1,5 bis 3,0-fachen des Nenndurchmessers des Schraubenabschnitts 18 entspricht.

Der Montagevorgang der Ankerstange 1 in den Verankerungsgrund 4 vollzieht sich beispielsweise wie folgt. Zunächst wird ein Bohrloch 2 in dem Verankerungsgrund 4 erstellt, beispielsweise mittels eines geeigneten Hammerbohrers. Anschließend wird die aushärtbare Masse 6 in das Bohrloch 4 eingebracht, wobei die einzubringende Menge der aushärtbaren Masse 6 derart ausgelegt ist, dass im montierten zustand der Ankerstange die aushärtbare Masse 6 zumindest im Bereich des mindestens einen Verbundspreizabschnitts 14 bzw. aller Verbundspreizabschnitte funktionsgerecht vorgesehen ist.

Anschließend wird die Ankerstange 1 mit ihrem Einführende 12 in das Bohrloch 2 eingeführt und beispielsweise mittels eines drehenden Werkzeugs in das Bohrloch 2 eingedreht. Im Zuge des Eindrehvorganges erzeugt der Schraubenabschnitt 18 gewindeartige Vertiefungen in der Bohrlochwandung 2'. Sobald der Schraubenabschnitt 18 ferner die in das Bohrloch 2 eingebrachte aushärtbare Masse 6 erreicht, wird diese durch die Gewindegänge des Gewindes 18 hin zu dem Verbundspreizabschnitt 14 und gegebenenfalls weiter bis zur Mündung des Bohrlochs 2 gefördert, sodass der Ringspalt 2" zwischen dem Schaft 10 und der Bohrlochwandung 2' mit der aushärtbaren Masse 6 gefüllt wird.

Abschließend kann ein Anbauteil 28 über den Schaft 10 der Ankerstange 1 gesteckt und mittels einer Mutter 24 und eines an dem Schaft 10 vorgesehenen Gewindes 26 befestigt werden. Dabei kann dank des Gewindeabschnitts 18, der formschlüssig in den Verankerungsgrund 4 eingreift, sofort ein Montagedrehmoment auf die Mutter 24 aufgebracht werden.

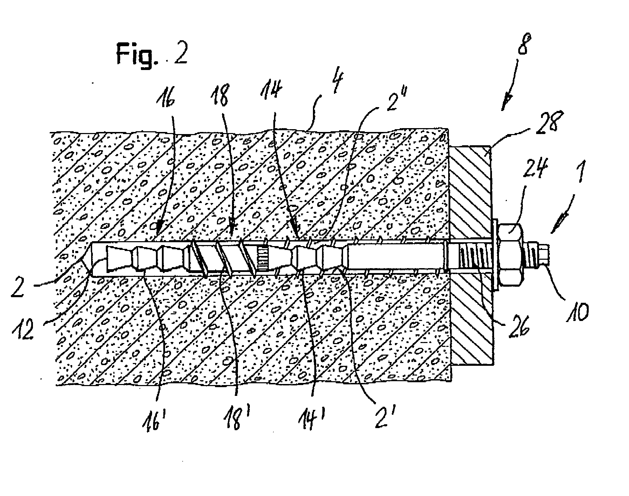

Eine zweite bevorzugte Ausführungsform der erfindungsgemäßen Befestigungsanordnung 8 bzw. der erfindungsgemäßen Ankerstange 1 ist in Fig. 2 schematisch dargestellt. Diese unterscheidet sich von der in Fig. 1 gezeigten Ausführungsform primär dadurch, dass die Ankerstange 1 benachbart zum Einführende 12 einen zweiten Verbundspreizabschnitt 16 aufweist, der in der vorliegenden Ausführungsform gleichartig zu dem ersten Verbundspreizabschnitt 14 ausgeführt ist. Im Übrigen entspricht die zweite Ausführungsform hinsichtlich Konstruktion und Montage der ersten Ausführungsform, sodass eine wiederholte Beschreibung derselben weggelassen wird.

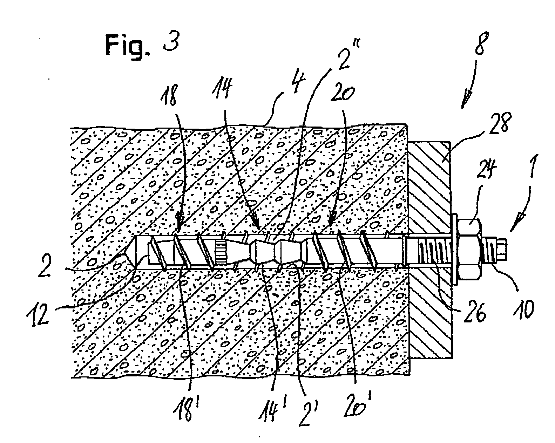

Eine dritte bevorzugte Ausführungsform der erfindungsgemäßen Befestigungsanordnung 8 bzw. der erfindungsgemäßen Ankerstange 1 ist in Fig. 3 schematisch dargestellt. Diese unterscheidet sich von der in Fig. 1 gezeigten Ausführungsform dadurch, dass sie ferner einen zweiten Gewindeabschnitt 20 aufweist, der zwischen dem Verbundspreizabschnitt 14 und dem Gewinde 26 des Schafts 10 angeordnet ist. Im Übrigen entspricht die zweite Ausführungsform hinsichtlich Konstruktion und Montage der ersten Ausführungsform, sodass eine wiederholte Beschreibung derselben weggelassen wird.

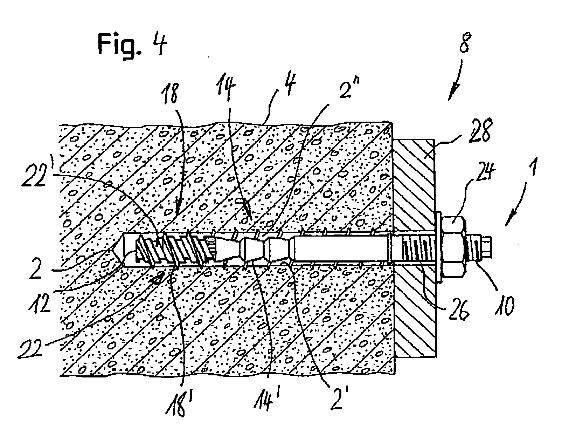

Eine vierte bevorzugte Ausführungsform der erfindungsgemäßen Befestigungsanordnung 8 bzw. der erfindungsgemäßen Ankerstange 1 ist in Fig. 4 schematisch dargestellt. Diese zeichnet sich dadurch aus, dass der zwischen dem Einführende 12 und dem Verbundspreizabschnitt 14 gelegene Schraubenabschnitt 18 Leitmittel 22 zum Leiten der aushärtbaren Masse 6 hin zu dem Verbundspreizabschnitt 14 aufweist. Dabei sind die Leitmittel 22 in der vorliegenden Ausführungsform als wendelartige Vertiefungen 22' in der Oberfläche des Schraubenabschnitts 18 ausgeformt. Auf diese Weise wird ermöglicht, dass auch bei viskoseren oder grobkörnigeren aushärtbaren Massen 6 ein zuverlässiger und zügiger Transport der aushärtbaren Masse 6 hin zu dem Verbundspreizabschnitt 14 oder anderen Verbundspreizabschnitten erfolgen kann. Im Übrigen entspricht die zweite Ausführungsform hinsichtlich Konstruktion und Montage der ersten Ausführungsform, sodass eine wiederholte Beschreibung derselben weggelassen wird.

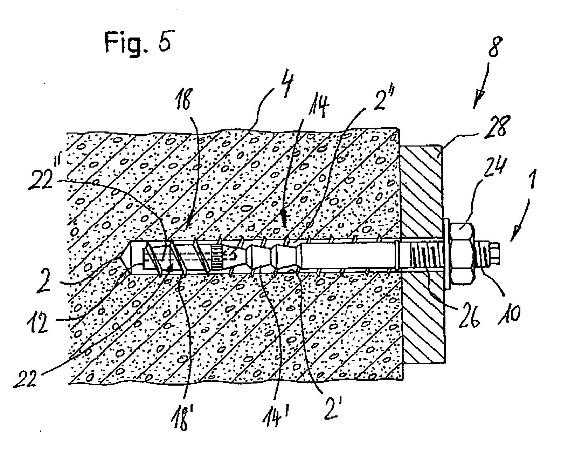

Eine alternative Ausgestaltung der unter Bezugnahme auf Fig. 4 beschriebenen Leitmittel 22 ist in Fig. 5 schematisch dargestellt, die eine fünfte bevorzugte Ausgestaltungsform der erfindungsgemäßen Befestigungsanordnung 8 bzw. der erfindungsgemäßen Ankerstange 1 zeigt. Bei dieser Ausführungsform sind die Leitmittel 22 als Durchgangsöffnung 22" im Schaft 10 der Ankerstange 1 gebildet, wobei sich die Durchgangsöffnung ausgehend vom Einführende erstreckt und im Bereich des Verbundspreizabschnitts 14 mündet. Auch hierdurch kann eine verbesserte bzw. zuverlässigere Förderung der aushärtbaren Masse hin zu dem Verbundspreizabschnitt 14 oder weiteren Verbundspreizabschnitten erreicht werden. Dabei ist zu beachten, dass die in Fig. 4 und Fig. 5 gezeigten Leitmittel auch miteinander kombiniert werden können, und dass auch andere Ausgestaltungen möglich sind.

## Patentansprüche

1. Ankerstange (1) zur Verankerung in einem Bohrloch (2) in einem Verankerungsgrund (4), insbesondere Beton, unter Einsatz einer aushärtbaren Masse (6), die in das Bohrloch (2) einbringbar und dort aushärtbar ist, mit einem Schaft (10), der aufweist:
ein Einführende (12),
mindestens einen Verbundspreizabschnitt (14, 16), dessen Umfang sich zumindest abschnittsweise in Richtung zu dem Einführende (12) hin erweitert, und
mindestens einen Schraubenabschnitt (18, 20), dessen Umfang mit einem Gewinde (18', 20') versehen ist, das dazu vorgesehen ist, in die Wandung (2') des Bohrlochs (2) einzugreifen.

2. Ankerstange nach Anspruch 1, **dadurch gekennzeichnet, dass** mindestens ein Schraubenabschnitt (18) zwischen dem Einführende (12) und einem Verbundspreizabschnitt (14) gelegen ist.

3. Ankerstange nach Anspruch 1 oder 2, **dadurch gekennzeichnet, dass** mindestens ein Schraubenabschnitt (20) auf der dem Einführende (12) gegenüber liegenden Seite des Verbundspreizabschnitts (14) gelegen ist.

4. Ankerstange nach einem der vorhergehenden Ansprüche, **dadurch gekennzeichnet, dass** mindestens ein Verbundspreizabschnitt (14, 16) eine Mehrzahl konischer Spreizabschnitte (14', 16') aufweist, deren Umfang sich jeweils zumindest abschnittsweise in Richtung zu dem Einführende (12) hin erweitert.

5. Ankerstange nach einem der vorhergehenden Ansprüche, **dadurch gekennzeichnet, dass** mindestens ein Verbundspreizabschnitt (14, 16) zumindest abschnittsweise eine Beschichtung oder Umhüllung aufweist.

6. Ankerstange nach einem der vorhergehenden Ansprüche, **dadurch gekennzeichnet, dass** mindestens ein Schraubenabschnitt (18, 20) ein selbstschneidendes Gewinde aufweist.

7. Ankerstange nach einem der vorhergehenden Ansprüche, **dadurch gekennzeichnet, dass** zumindest ein Schraubenabschnitt (18, 20) in einer Erstreckungsrichtung der Ankerstange (10) eine Länge besitzt, die zumindest dem 1,0-fachen und bevorzugt höchstens dem 5,0-fachen des Nenndurchmessers des Schraubenabschnitts (18, 20) entspricht.

8. Ankerstange nach einem der vorhergehenden Ansprüche, **dadurch gekennzeichnet, dass** zumindest ein Schraubenabschnitt (18, 20), insbesondere ein zwischen dem Einführende (12) und einem Verbundspreizabschnitt (14) gelegener Schraubenabschnitt (18), Leitmittel (22) zum Leiten einer aushärtbare Masse (6) in einer Längsrichtung der Ankerstange (10) weg vom Einführende (12) aufweist.

9. Ankerstange nach Anspruch 8, **dadurch gekennzeichnet, dass** die Leitmittel (22) wendelartige Vertiefungen in der Oberfläche des Schraubenabschnitts (18, 20) und/oder mindestens eine Durchgangsöffnung im Schaft (10) der Ankerstange (1), die bevorzugt ausgehend vom Einführende (12) in einem Verbundspreizabschnitt (14) mündet, aufweist.

10. Befestigungsanordnung (8), die in einem Bohrloch (2) in einem Verankerungsgrund (4), insbesondere Beton, verankert ist, umfassend:
eine Ankerstange (1) nach einem der vorhergehenden Ansprüche, die derart angeordnet ist, dass zumindest ein Schraubenabschnitt (18, 20) und zumindest ein Verbundspreizabschnitt (14, 16) in dem Bohrloch (2) gelegen sind, und
eine aushärtbare Masse (6), die in dem Bohrloch (2) in einem zwischen der Ankerstange (1) und der Bohrlochwandung (2') vorgesehenen Ringspalt (2") angeordnet ist.

11. Befestigungsanordnung nach Anspruch 10, **dadurch gekennzeichnet, dass** die aushärtbare Masse (6) zumindest im Bereich des mindestens einen Verbundspreizabschnitts (14, 16) vorgesehen ist.

12. Verfahren zum Herstellen einer Befestigungsanordnung nach Anspruch 10 oder 11, mit den Schritten:
Herstellen eines Bohrlochs (2) in einem Verankerungsgrund (4), insbesondere Beton,
Eindrehen einer Ankerstange (1) nach einem der Ansprüche 1 bis 9 in das Bohrloch, und
Einbringen einer aushärtbaren Masse (6) in das Bohrloch, wobei die aushärtbare Masse (6) vor und/oder nach dem Eindrehen der Ankerstange (1) in das Bohrloch (2) eingebracht wird.
